# EUROPEAN PATENT APPLICATION

(11) **EP 3 912 473 A1**
(43) Date of publication of application: **24.11.2021**
(21) Application number: 21171100.7
(22) Date of filing: 29.04.2021
(51) Int. Cl.: A23B 4/052, A47J 37/07, F24B 1/02, F23B 10/00, F23N 1/00, F23Q 7/04

(54) **SMOKE GENERATOR COMPRISING AN ULTRASONIC SOUND SENSOR AND A LID SENSOR**

(30) Priority: 13.05.2020 US 202015930679
(71) Applicant: Dansons US, LLC, Phoenix, AZ 85013 (US)
(72) Inventor: LI, Li, Chandler, 85224 (US); LI, Rodney, Foshan City (CN); MALLA, Perini Valla, Phoenix, 85020 (US)
(74) Representative: Prüfer & Partner mbB Patentanwälte · Rechtsanwälte

(57) **Abstract**

Disclosed is an outdoor cooking appliance with a smoke generator that directs smoke into a cooking chamber of the appliance without significantly increasing the temperature therein. For example, the smoke generator can include an ignitor that combusts fuel and a fan that directs air and smoke from the combustion into the cooking chamber.

## Description

### Technical Field of the Invention

The presently disclosed embodiments relate generally to grills and smokers. More particularly, the presently disclosed embodiments relate to grills and smokers with a smoke generator designed to direct smoke into a cook chamber of a grill or smoker.

### Background of the Invention

Smokers are a common outdoor cooking appliance that burn fuel at a low temperature to cause heat and smoke to flow into a cook chamber. The smoke not only cooks the meat within the cook chamber but also provides flavor during the cooking process. Grills can use a similar process to burn fuel, typically at higher temperatures, to likewise provide a flavor to the food that is difficult to obtain using a conventional indoor cooking appliance.

Pellet grills and smokers are common types of appliances used for cooking meat or other food. These appliances burn fuel, such as pellets of wood, based on a temperature of the cook chamber. A user can operate a controller to set the temperature of the cook chamber, and the appliance will then burn pellets supplied by an auger until the temperature is reached. Thereafter, the appliance will sense that the desired temperature has been reached and will temporarily halt the supply of pellets to avoid going above the desired temperature, similar to a thermostat system.

Combustion of wood occurs in four stages. The first stage is referred to as dehydration and occurs below 500° F. Up to about 300° F, water embedded in the wood evaporates, thereby drying out the wood. Some simple molecules, such as carbon dioxide and methanol, begin to emerge. This stage of combustion absorbs heat from the system and does not give off a substantial amount of heat. Further, no flame is present.

The second stage includes gasification and pyrolysis and occurs between 500° and 700° F. Combustion of the wood begins in this stage. The compounds in the wood begin to change and produce flammable gases and/or oily liquids and tars.

The third stage is referred to as burning bush and occurs between 700°-1000° F. A flame appears in this stage. In addition, more gases emerge, including nitric oxide (NO), which is essential for formation of the smoke ring in meat. The best aromatic compounds for cooking are emitted at about 650° to 750° F, thus it is preferred to burn pellets at this temperature. The emitted compounds include guaiacol and syringol, which are primarily responsible for the aromas of smoked meat. Some of the emitted compounds are ethereal and dissipate over time. As the temperature rises above 750° F, acrid, bitter, and possibly hazardous compounds are formed.

The fourth stage includes charcoal formation and occurs above 1,000° F. At this stage, most of the organic compounds have burned off, leaving behind pure carbon, or char, which burns with little smoke.

Pellet grills and smokers typically include a burn pot assembly that burns the pellets and is usually located at a bottom and center area of the appliance. The burn pot assembly directs heat and smoke upward as the pellets are burned. Some of these appliances struggle to direct more smoke into the cook chamber without significantly changing the temperature of the cook chamber or the temperature at which the pellets are burned.

### Summary of the Invention

The presently disclosed embodiments include a smoke generator that directs smoke into a cooking chamber of an appliance. The smoke generator allows for additional smoke to be directed into the cooking chamber without significantly changing the temperature therein. The smoke generator can be controlled based on inputs from sensors.

In particular, the presently disclosed embodiments include an appliance including a main body defining an internal cooking chamber, a burn pot assembly that provides heat to the cooking chamber, and a smoke generator that provides smoke to the cooking chamber. The smoke generator includes an ignitor that generates smoke by burning fuel, such as pellets, charcoal, etc., and a fan that directs air over the ignitor.

The presently disclosed embodiments further include a smoke generator that provides smoke to a cooking chamber of a pellet grill or smoker. The smoke generator includes a main body, an ignitor that generates smoke by combusting fuel, such as pellets, charcoal, etc., at an optimal temperature, a fan that directs air over the ignitor, an ignitor housing that receives the ignitor, and an insert that retains fuel adjacent the ignitor.

### Brief Description of the Drawings

For the purpose of facilitating an understanding of the subject matter sought to be protected, there are illustrated in the accompanying drawings embodiments thereof, from an inspection of which, when considered in connection with the following description, the subject matter sought to be protected, its construction and operation, and many of its advantages should be readily understood and appreciated.
FIG. 1 is a front perspective view of an appliance according to at least one of the presently disclosed embodiments
FIG. 2 is a top perspective view of a heating system of an appliance according to at least one of the presently disclosed embodiments.
FIG. 3 is a front perspective view of a smoke generator according to at least one of the presently disclosed embodiments.
FIG. 4 is an exploded, front perspective view of the smoke generator shown in FIG. 3.
FIG. 5 is a front perspective view of a lid sensor assembly according to at least one of the presently disclosed embodiments.

### Detailed Description of the Embodiments

While this invention is susceptible of embodiments in many different forms, there is shown in the drawings, and will herein be described in detail, a preferred embodiment of the invention with the understanding that the present disclosure is to be considered as an exemplification of the principles of the invention and is not intended to limit the broad aspect of the invention to embodiments illustrated. As used herein, the term "present invention" is not intended to limit the scope of the claimed invention and is instead a term used to discuss exemplary embodiments of the invention for explanatory purposes only.

The presently disclosed embodiments include an outdoor cooking appliance, such as a smoker or grill, with a smoke generator that provides smoke to a cooking chamber and a burn pot assembly that provides heat and smoke to the cooking chamber. The smoke generator directs additional smoke into the cooking chamber without significantly changing the temperature of the burn pot assembly or the cooking chamber. Inputs from sensors can be used by a controller to control the smoke generator. A warning can be output visually and/or audibly when the amount of fuel in the appliance is low.

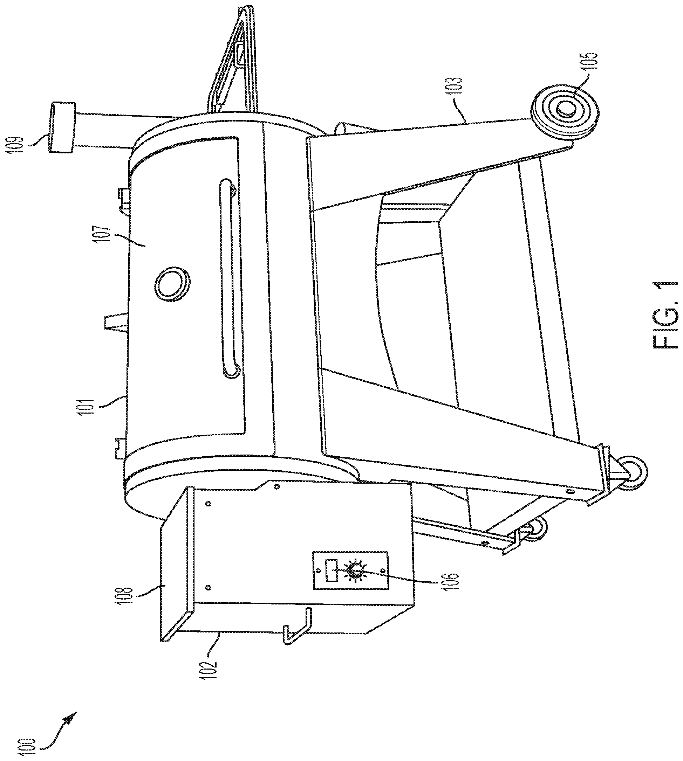

As shown in FIG. 1, an appliance 100 includes a cooking chamber 101 coupled to a base 103 having wheels 105. Within the cooking chamber 101 can be food, for example, meat or vegetables, that can be cooked in either a grilling or smoking application. The cooking chamber 101 can be enclosed by a chamber lid 107 on a top of the cooking chamber 101 that allows the user access to retrieve or adjust the food being cooked within the cooking chamber 101. The appliance 100 can further include a hopper lid 108 for enclosing the hopper 102 but allowing selective access thereto. The appliance 100 can further include a chimney 109 for directing exiting smoke and heat in an upwardly direction so as to provide the outlet for air flow through the appliance 100. In certain exemplary embodiments, the appliance 100 is a pellet grill or smoker, although the present invention is not so limited.

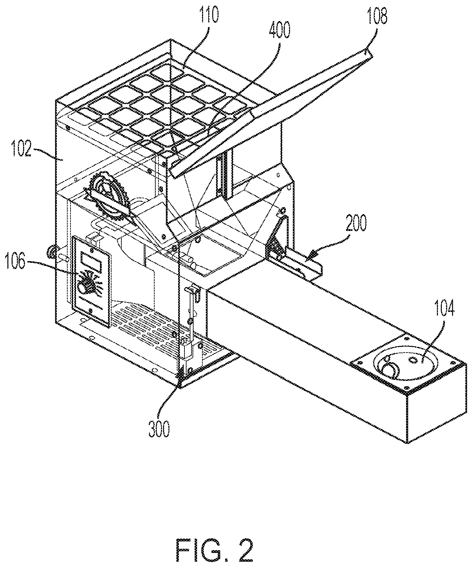

FIG. 2 illustrates a heating system according to at least some of the presently disclosed embodiments. As shown, the heating system can be used with a pellet grill or smoker, although the present invention is not so limited. The heat system includes a hopper 102 that can hold and store fuel (such as wood pellets, charcoal, etc.), and can direct the fuel towards an auger. The auger can convey fuel to a burn pot assembly 104 for combustion. Smoke and heat resulting from the combustion within the burn pot assembly 104 is directed to the cooking chamber 101 where food, for example, meat or vegetables, can be cooked in either a grilling or smoking application.

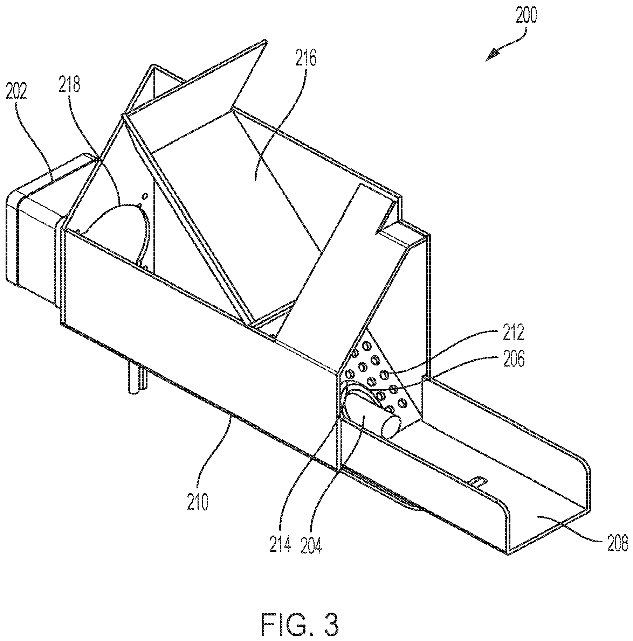

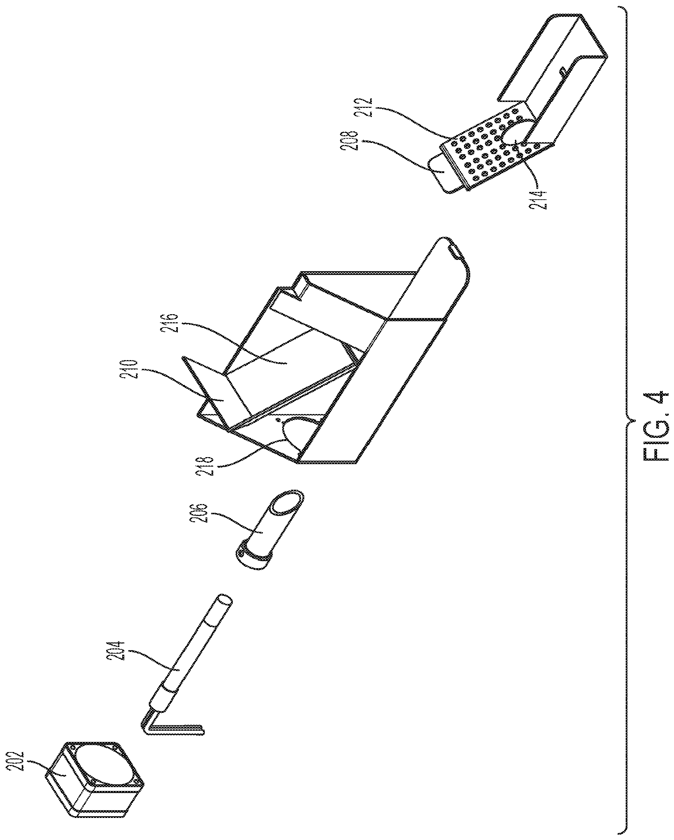

FIG. 3 is a front perspective view of a smoke generator 200; and FIG. 4 is an exploded, front perspective view of the smoke generator 200 according to at least one of the presently disclosed embodiments. As shown, the smoke generator 200 can include a fan 202 for blowing air through the smoke generator 200 and improving air flow. Downstream from the fan 202 can be an ignitor 204 for heating fuel such as pellets to cause smoke or heat to generate for cooking food in the appliance 100. In an embodiment, the ignitor 204 heats pellets to cause the pellets to smoke without a substantial corresponding increase in heat from the pellets. An ignitor housing 206 can be provided around the ignitor 204 to house the ignitor 204 during use. Further, an insert 208 can be located on top of a main body 210 to receive pellets or other fuel within the smoke generator 200 in a manner that allows air flow to surround the fuel. The smoke generator 200 can be removably coupled to the appliance 100, thereby improving access for cleaning and/or maintenance. The smoke generator 200 directs smoke into the cooking chamber 101 of the appliance 100 without significantly increasing the temperature therein by burning fuel, such as wood pellets, at an optimal temperature. The optimal temperature can be about 650° to 750° F.

The fan 202 can direct air over the ignitor and through the insert 208, thereby directing smoke created by burning fuel, such as pellets, into the cooking chamber 101 and aiding in the combusting of fuel. The fan 202 can be coupled to the main body 210 using fasteners, such as bolts, screws, etc. The fan 202 can be powered from a power source of the appliance 100, such as a battery or a power cable via a wall outlet. The fan 202 can be in a constant ON state when receiving power from the power source. In another embodiment, the fan 202 can have an ON/OFF switch that can be operated by a user, or that is automatically operated based on a control of the appliance 100. In yet another embodiment, a controller 106 can cycle the fan 202 ON and OFF based on the desired amount of additional smoke needed in the cooking chamber 101.

The ignitor 204 can burn fuel, such as pellets, to provide smoke to the cook chamber 101. The ignitor 204 can be an electrical heating element. The ignitor can burn fuel at about 650° to 750° F, for example, but any temperature combustion is acceptable without departing from the spirit and scope of the present invention. The burning of the fuel creates smoke, which is then directed into the cooking chamber 101, as described above. The ignitor 204 can be powered from a power source of the appliance 100, such as a battery or a power cable via a wall outlet. The ignitor 204 can be in a constant ON state when receiving power from the power source. In another embodiment, the ignitor 204 can have an ON/OFF switch that can be operated by a user. In yet another embodiment, the controller 106 can cycle the ignitor 204 ON and OFF to maintain a desired burning temperature.

The ignitor housing 206 can receive the ignitor 204 and couples the ignitor 204 to the main body 210. The ignitor housing 206 can limit contact between the ignitor 204 and other components of the smoke generator 200.

The insert 208 can retain fuel, such as pellets, around the ignitor 204 for combustion. The insert 208 can have air flow apertures 212 that allow air to flow from the fan 202 through the air flow apertures 212, thereby directing air to the fuel. The insert 208 can include an insert aperture 214 that allows the ignitor 204 and the ignitor housing 206 to pass through the insert aperture 214 to allow the ignitor 204 to burn fuel.

The main body 210 can be removably coupled to the appliance 100 using conventional methods. The main body 210 can include a chute 216 that directs fuel disposed in the hopper 102 of the appliance 100 to the insert 208 using gravity. The main body 210 can include a main body aperture 218 that can receive the ignitor housing 206 and the ignitor 204 and allow air from the fan 202 and pass through the main body 210. The main body 210 can retain all the components of the smoke generator 200 described above, thereby forming an assembly that can be removably coupled to the hopper 102 of the appliance 100.

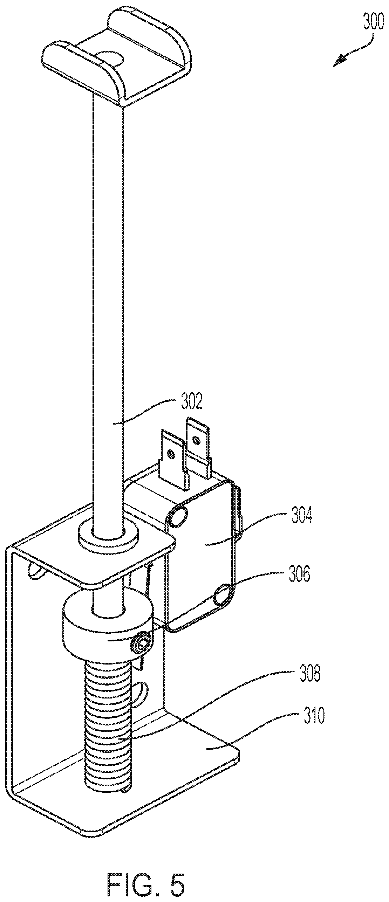

FIG. 5 is a front perspective view of a lid sensor assembly 300 according to at least one of the presently disclosed embodiments. FIG. 2, for example, shows the lid sensor assembly 300 disposed in the hopper 102 of the appliance 100. The lid sensor assembly 300 includes a connecting rod 302, a switch 304, a flag 306, a biasing member 308, and a body 310. The lid sensor assembly 300 can recognize an opening event of a lid 108 of the appliance 100 and send a corresponding open signal to the controller 106. The lid sensor assembly 300 can further recognize a closed event of the lid 108 and send a corresponding closed signal to the controller 106. The controller 106 enters a lid open mode when the open signal is received and controls the smoke generator 200 accordingly. When the controller 106 receives the closed signal, the controller can resume normal operation and enters a lid closed mode.

When the lid 108 is opened, the movement is transferred to the flag 306 (also referred to as a sliding hummer) by the connecting rod 302. The flag 306 actuates the switch 304 to be in a closed state and compresses the biasing member 308 to reserve elastic potential energy. The switch 304 can be a micro switch, and the biasing member 308 can be a spring. The switch 304 outputs the open signal to the controller 106 when in the closed state. When the lid 108 is closed, the flag 306 is returned to its original position by the elastic potential energy of the biasing member 308 and the switch 304 is in an open state. The switch 304 outputs the closed signal to the controller 106 when in the open state.

The controller 106 may also control the smoke generator 200 based on inputs from other sensors. For example, the controller 106 can turn the fan 202 and/or the ignitor 204 OFF based on a low level signal sent by a level sensor 400 that detects the level of fuel in the hopper 102. The level sensor 400 can be disposed inside the hopper 102. For example, the level sensor 400 can be coupled to a safety screen 110 inside of the hopper 102, as shown in FIG. 2.

The level sensor 400 can be, for example, an ultrasonic sensor that measures the distance to fuel, such as pellets, using ultrasonic sound waves and uses a transducer to send and receive ultrasonic pulses that relay back information about a proximity of fuel to the ultrasonic sensor. Where the fuel is wood pellets, the sound waves sent by the ultrasonic sensor are reflected by a surface of the pellets and then received by the ultrasonic sensor to calculate the distance between the ultrasonic sensor and the surface of the pellets. The distance information can be sent to the controller 106. A display operatively coupled to the controller 106 can indicate the level of fuel. Additionally or alternately, the level of fuel can be indicated on a mobile device, such as a phone, tablet, or similar device, using conventional methods. A low fuel level indication may be indicated visually via the display and/or the mobile device and/or can be indicated audibly when the distance between fuel and the level sensor 400 exceeds a preset value.

As used herein, the terms "grill" or "smoker" are intended to be construed broadly as including any outdoor cooking appliance that uses heat. For example, a "grill" or "smoker" according to the present invention can include a grill, smoker, griddle, burner, wood stove, outdoor heater, or any other outdoor cooking appliance that uses heat.

As used herein, the term "coupled" and its functional equivalents are not intended to necessarily be limited to direct, mechanical coupling of two or more components. Instead, the term "coupled" and its functional equivalents are intended to mean any direct or indirect mechanical, electrical, or chemical connection between two or more objects, features, work pieces, and/or environmental matter. "Coupled" is also intended to mean, in some examples, one object being integral with another object.

The matter set forth in the foregoing description and accompanying drawings is offered by way of illustration only and not as a limitation. While particular embodiments have been shown and described, it will be apparent to those skilled in the art that changes and modifications may be made without departing from the broader aspects of the inventors' contribution. The actual scope of the protection sought is intended to be defined in the following claims when viewed in their proper perspective based on the prior art.

## Claims

1. An appliance comprising:
a main body defining an internal cooking chamber;
a burn pot assembly that provides heat to the cooking chamber; and
a smoke generator separate from the burn pot assembly and that provides smoke to the cooking chamber, the smoke generator including an ignitor that generates smoke by combusting fuel at a smoke temperature lower than a burn pot temperature, and a fan that directs air over the ignitor.

2. The appliance of claim 1, wherein the smoke generator further comprises:
a body releasably coupled to the appliance, the body preferably including a chute that directs fuel from a hopper of the appliance to the insert;
an ignitor housing that receives the ignitor and retains the ignitor to the body, the ignitor housing preferably limiting contact between the ignitor and the body and the insert; and
an insert that retains fuel around the ignitor.

3. The appliance of claim 2, wherein the insert includes air flow apertures that allow air directed from the fan to pass through the insert.

4. The appliance of claim 2 or 3, wherein the insert includes an insert aperture that allows the ignitor and the ignitor housing to pass through the insert.

5. The appliance of one of claims 1 to 4, wherein the fuel is wood pellets and/or wherein the burn pot assembly is a pellet combustion burn pot assembly for a pellet smoker or grill.

6. The appliance of one of claims 1 to 5, wherein the ignitor burns fuel at about 650° to 750° F.

7. The appliance of one of claims 1 to 6, further comprising a lid sensor assembly that detects an open or close event of a lid of the appliance and a level sensor that determines a level of fuel disposed in the appliance, wherein the smoke generator is controlled by a controller based on the inputs of the lid sensor assembly and the level sensor.

8. A smoke generator that provides smoke to a cooking chamber of a pellet grill or smoker, the smoke generator comprising:
a main body;
an ignitor that generates smoke by combusting fuel at an optimal temperature;
a fan that directs air over the ignitor;
an ignitor housing that receives the ignitor; and
an insert that retains fuel adjacent the ignitor.

9. The smoke generator of claim 8, wherein the smoke generator is releasably coupled to the pellet grill or smoker.

10. The smoke generator of claim 8 or 9, wherein the main body includes a chute that directs fuel from a hopper of the pellet grill or smoker to the insert.

11. The smoke generator of one of claims 8 to 10, wherein the optimal temperature is about 650° to 750° F.

12. The smoke generator of one of claims 8 to 11, wherein the insert includes air flow apertures that allow air directed from the fan to pass therethrough.

13. The smoke generator of one of claims 8 to 12, wherein the insert includes a main body aperture that allows the ignitor and the ignitor housing to pass therethrough.

14. The smoke generator of one of claims 8 to 13, further comprising a controller that controls the smoke generator based on inputs from a lid sensor assembly and a level sensor, wherein the lid sensor assembly preferably detects an open or close event of a lid of a hopper of the pellet grill or smoker, and/or wherein the level sensor preferably determines a level of fuel disposed in a hopper of the pellet grill or smoker.

15. The smoke generator of claim 14, wherein the level sensor is an ultrasonic sensor.
